# EUROPEAN PATENT SPECIFICATION

(11) **EP 3 074 281 B1**
(45) Date of publication and mention of the grant of the patent: **14.02.2018**
(21) Application number: 14827293.3
(22) Date of filing: 25.11.2014
(51) Int. Cl.: B60S 1/50

(54) **WINDSHIELD WASHER FLUID SUPPLY SYSTEM**
SYSTEM ZUR ZUFUHR EINER SCHEIBENREINIGUNGSFLÜSSIGKEIT
SYSTÈME D'ALIMENTATION EN FLUIDE DE LAVE-GLACE

(30) Priority: 25.11.2013 TR 201313705
(43) Date of publication of application: 05.10.2016
(73) Proprietor: Tofas Turk Otomobil Fabrikasi Anonim Sirketi, Bursa (TR)
(72) Inventor: SOMYAK, Cemal, Bursa (TR); OZCAN, Ismail, Bursa (TR)
(74) Representative: Dericioglu Kurt, Ekin
(86) International application number: PCT/TR2014/000468
(87) International publication number: WO 2015/076772

(56) References cited:
- DE-A1- 10 138 466
- DE-A1- 10 250 440
- DE-A1- 19 912 294

## Description

### Field of the Invention

The present invention relates to a windshield washer fluid supply system which enables the washer fluid tank connected to the windshield washing system in automobiles to be filled with rain water.

### Background of the Invention

In vehicles, windshield cleaning is performed by wipers which are moved by a mechanism provided at the bottom of the windshield and which contact the glass surface. Washer panels, which are located at the bottom part of the windshields, are used as a water supplier to the wiper systems, which are used for windshield cleaning purposes. The water sprayed to the windshield by the washer panels comes from the windshield washer fluid tank located under the engine hood. When the water in the washer fluid tank is finished, the automobile driver opens the engine hood and puts water into the said tank, and antifreeze fluid in winter to prevent freezing of the water. In the current systems, there is no chance of adding windshield washer fluid without opening the engine hood. Furthermore, drivers should always have water and (if in winter) antifreeze fluid, which prevents freezing of water, available in the vehicle.

In the applications in the state of the art, the capacity of the washer fluid tank is kept large (6 - 8 liters) in order to eliminate the need for the driver to add water to the tank frequently. Accordingly, the washer fluid tank both occupies a large area within the hood, and the requirement of use of plastic in the production of tank increases. Overuse of plastic materials in production of tanks increases cost and causes harm to nature. Large volume washer fluid tanks also create big problems for the chassis under the engine hood. Currently, the windshield washer fluid tank is positioned under some components or at places which will be barely noticed by the driver at this area where a plurality of complicated systems (engine system, electronic systems, etc.) are located. For this reason, the users have difficulty in finding the washer fluid tank and sometimes they damage the vehicle by mistake by opening the filling opening (engine oil filling opening, brake hydraulic water filling opening, etc.) of tanks that belong to different systems instead of the filler opening of the washer fluid, and pouring the fluid into a wrong tank.

Korean patent document no. KR20080092913, an application in the state of the art, discloses a system for cleaning vehicle windshields. This system comprises a water trapping device for collecting rain water or washing system water falling onto the vehicle. This device filters and cleans the trapped water and directs it to a wipe/wash container. Then a mixture, with which the vehicle windshield is washed, is prepared by adding an antifreeze element to the washing water depending on the external temperature.

German patent document no. DE19912294, an application in the state of the art, discloses a washing system which has an additional container that collects rain water and does not require manually filling the vehicle windshield washer tank with water.

Chinese utility model document no. CN202243358, an application in the state of the art, discloses a water tank for the windscreen wipers in vehicles. The water tank which comprises an auxiliary water tank in which rain water is collected and which is connected to the main water tank. There is a filter arranged at an inlet of the water pipe.

German patent document no. DE102009013581, an application in the state of the art, discloses a windshield washer system which has chambers for accommodating washing liquid and rain water, and wherein these chambers are connected together by an inlet, where an opening degree of the inlet is adjustable. There are level measuring instruments within these chambers.

German patent document no. DE102008033685, an application in the state of the art, discloses a windshield washer system which comprises a tank where the rain water is collected, a washing liquid tank which is connected to the former tank via a connecting member, and a separate container that is connected thereto for adding liquid additives into rain water.

German patent document no. DE4101820, an application in the state of the art, discloses a windshield washer system that comprises a rain water reservoir which is used as a support to the main water reservoir and where the rain water is collected. The rain water is cleaned with a filter and transmitted to the main water reservoir. An overflow pipe removes excess rainwater. DE-A-10138466 shows the preamble of claim 1.

### Summary of the Invention

The objective of the present invention is to provide a washer fluid supply system which enables to clean the rain water by a filter and store it for use as windshield washer fluid.

Another objective of the present invention is to provide a washer fluid supply system which enables addition of antifreeze to the washer fluid tank depending on the collected rain water.

A further objective of the present invention is to provide a washer fluid supply system which prevents entrance of the rain water into the washer fluid tank when there is no antifreeze in the antifreeze tank.

### Detailed Description of the Invention

"Windshield washer supply system" developed to fulfill the objective of the present invention is illustrated in the accompanying figures, in which:

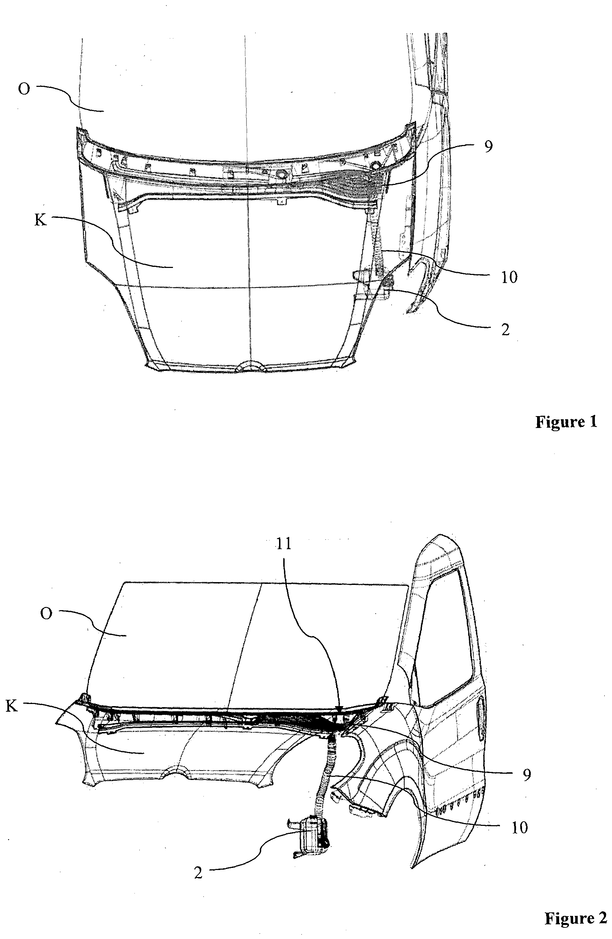

Figure 1 is the top view of the vehicle front part.
Figure 2 is the front view of the vehicle front part and representation of the windshield washer supply system of the present invention.

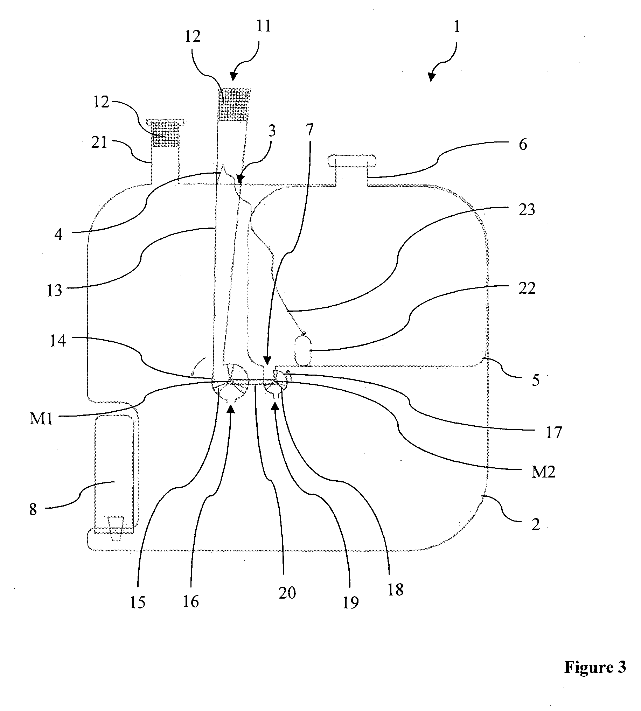

Figure 3 is the schematic representation of the windshield washer supply system of the present invention.

The components given in the figures are assigned reference numbers as follows:
1. Windshield washer supply system
2. Washer fluid tank
3. Water inlet
4. Cover
5. Antifreeze tank
6. Antifreeze inlet
7. Antifreeze discharge opening
8. Pump
9. Grille
10. Pipe
11. Rain water inlet
12. Filter
13. Hose
14. Water chamber
15. Primary propeller
16. Waster outlet
17. Antifreeze chamber
18. Secondary propeller
19. Antifreeze outlet
20. Transmission element
21. Manual washer fluid inlet
22. Float
23. Rope
   O. Windshield
   K. Engine hood
   M1. Central shaft of the primary propeller
   M2. Central shaft of the secondary propeller

The windshield washer fluid supply system (1) of the present invention; which enables the rain water, which flows over the vehicle windshields (O) in rainy weather conditions and moves towards the engine hood (K), to be collected for use as a windshield washer fluid (O); comprises
- at least one washer fluid tank (2), which is in the form of a box in which the washer fluid used for the wipers is collected, and which comprises a water inlet (3) that enables the water to enter therein and at least one cover (4) that has the right size to cover the water inlet (3) and is arranged on the water inlet (3),
- an antifreeze tank (5), which is located in the washer fluid tank (2), and which is positioned connected to the washer fluid tank (2) via at least one surface thereof, and which has an antifreeze inlet (6) that extends outwards from the said surface,
- at least one pump (8) which enables to deliver the mixture of water and antifreeze in the washer fluid tank (2) to the windshield (O),
- at least one rain water inlet (11); which is located at the area where the windshield (O) and the engine hood (K) are connected; and which has at least one grille (9) that is located on the engine hood (K) and enables collection of water at the entrance thereof, and a pipe (10) that enables to direct the collected rain water to the washer fluid tank (2),
- at least one filter (12) which is located inside the pipe (10) and which enables to remove possible impurities from within the rain water,
- at least one hose (13) which extends from the water inlet (3) into the washer fluid tank (2),
- at least one water chamber (14) having a primary propeller (15), which is located at the end of the hose (13) and which makes a rotational movement around the center shaft (M1) under the influence of the flowing water, and a water outlet (16) which is located below the primary propeller (15) and which enables the water to flow into the washer fluid tank (2),
- at least one antifreeze chamber (17) having a secondary propeller (18), which is connected to the antifreeze discharge opening (7) located on the base of the antifreeze tank (5) and which makes a rotational movement around the center shaft (M2), and an antifreeze outlet (19) which is located below the secondary propeller (18) and which enables the antifreeze to flow into the washer fluid tank (2),
- at least one transmission element (20); which enables the center shaft (M1) of the primary propeller (15) to be connected to the center shaft (M2) of the secondary propeller (18), and thus, enables to rotate the secondary propeller (18) depending on the amount of water rotating the primary propeller (15) upon hitting the primary propeller (15); and which regulates flow of antifreeze from the antifreeze tank (5) into the washer fluid tank (2).

In the preferred embodiment of the invention, the washer fluid tank (2) comprises a manual washer fluid inlet (21), which makes it possible for the user to fill washer fluid independent of rain water, and on the entrance of which, a filter (12) is positioned that enables to remove the impurities within the fluid.

In the preferred embodiment of the invention, the washer fluid tank (2) has a smaller volume, preferably 2-4 liter volume, compared to the conventional applications since it can be continuously filled with rain water independent from fluid addition of the user.

In the preferred embodiment of the invention, the washer fluid tank (2) has a spring mechanism which pushes the cover (4) away from the water inlet (3) to ensure that the cover (4) provided on the water inlet (3) does not close the water inlet (3) unless a force is applied thereon.

In the preferred embodiment of the invention; the antifreeze tank (5) has at least one float (22), which is positioned to be floating on the surface of the antifreeze within the tank, and is tied to the cover (4) located on the water inlet (3) via a rope (23), and which, when the antifreeze is finished, descends and pulls the rope (23) connected thereto and thus the cover (4), and thereby closes the water inlet (3), and which, this way, prevents entrance of rain water into the washer fluid tank (2) when there is no antifreeze left.

In the preferred embodiment of the invention, when the cover (4) contacts the water inlet (3), in other words, when it closes the water inlet (3), a warning unit is used in order to warn the user visually via the instrument panel about the fact that fluid entrance is blocked.

In the preferred embodiment of the invention, the transmission element (20) is a shaft which is fastened by being welded to the center shafts (M1, M2) of the primary propeller (15) and the secondary propeller (18).

In another embodiment of the invention, the transmission element (20) is a chain which connects the center shaft (M1) of the primary propeller and the center shaft (M2) of the secondary propeller to each other and which makes a rotational movement at the rotation direction of the propellers (15, 18).

In the windshield washer fluid supply system (1) of the present invention, the washer fluid tank (2) is enabled to be filled with rain water independent from the user manually filling the windshield washer fluid used in windshield cleaning. The rain water will pass through the filter (12) located at the rain water inlet (11), and will pass through the cover (4), which is continuously kept open when there is antifreeze in the antifreeze tank, and will move the primary propeller (15). Then the water will be filled into the washer fluid tank (2) through the water outlet (16). The movement acquired by the primary propeller is transmitted to the secondary propeller by means of a transmission element (20). This way, for each 1 volume of water entering into the washer fluid tank (2), 1 volume of antifreeze will be poured into the washer fluid tank (2) via the antifreeze outlet (19). The primary propeller (15) and the secondary propeller (18) preferably rotate at the same direction.

Upon lifting the engine hood (K), the user can put antifreeze through the antifreeze inlet (6) located on the washer fluid tank (2) which is at an easy and visible location. When the antifreeze is finished, the float (23) will descend and enable the cover (4) to close the water inlet (3) and thus will prevent entrance of rain water. This way, when the antifreeze is finished, the washer fluid tank (2) will not be filled even if it is raining. As long as the user does not put antifreeze in the antifreeze tank (5), entrance of rain water will not be possible. On the other hand, when the user desires, s/he may put either regular water or a washer fluid including a special mixture fluid with antifreeze into the washer fluid tank (2) through the manual washer fluid inlet (21).

By means of the windshield washer fluid supply system (1) of the present invention;
- The requirement of continuously checking the washer fluid tank (2) will cease since the washer fluid tank (2) will be automatically filled with rain water.
- The users will not have to keep spare water or special fluids in their vehicles which are used in winter to prevent freezing of the water.
- There is no requirement for the vehicle to be in stop position for filling water. The washer fluid tank (2) can be automatically filled when it is raining, and at the same time, it may also provide for its requirement of antifreeze all by itself.
- Since the washer fluid tank (2) is of small volume, both its cost is small and its harm to environment decreases.
- The problems occurring in the arrangement under the engine hood are eliminated by the small volume (3 - 4 liters) of the washer fluid tank (2). This way, location of the washer fluid tank (2) can be positioned at a place where the user can easily access, and it will be ensured that the tank (2) will not be mistaken by other systems.

## Claims

1. A windshield washer fluid supply system (1); which enables the rain water, which flows over the vehicle windshields (O) in rainy weather conditions and moves towards the engine hood (K), to be collected for use as a windshield washer fluid (O); comprising :
- at least one washer fluid tank (2), which is in the form of a box in which the washer fluid used for the wipers is collected, and which comprises a water inlet (3) that enables the water to enter therein and at least one cover (4) that has the right size to cover the water inlet (3) and is arranged on the water inlet (3),
- an antifreeze tank (5), which is located in the washer fluid tank (2), and which is positioned connected to the washer fluid tank (2) via at least one surface thereof, and which has an antifreeze inlet (6) that extends outwards from the said surface,
- at least one pump (8) which enables to deliver the mixture of water and antifreeze in the washer fluid tank (2) to the windshield (O),
- at least one rain water inlet (11); which is located at the area where the windshield (O) and the engine hood (K) are connected; and which has at least one grille (9) that is located on the engine hood (K) and enables collection of water at the entrance thereof, and a pipe (10) that enables to direct the collected rain water to the washer fluid tank (2),
- at least one filter (12) which is located inside the pipe (10) and which enables to remove possible impurities from within the rain water,
- at least one hose (13) which extends from the water inlet (3) into the washer fluid tank (2), **characterized by** :
- at least one water chamber (14) having a primary propeller (15), which is located at the end of the hose (13) and which makes a rotational movement around the center shaft (M1) under the influence of the flowing water, and a water outlet (16) which is located below the primary propeller (15) and which enables the water to flow into the washer fluid tank (2),
- at least one antifreeze chamber (17) having a secondary propeller (18), which is connected to the antifreeze discharge opening (7) located on the base of the antifreeze tank (5) and which makes a rotational movement around the center shaft (M2), and an antifreeze outlet (19) which is located below the secondary propeller (18) and which enables the antifreeze to flow into the washer fluid tank (2),
- at least one transmission element (20); which enables the center shaft (M1) of the primary propeller (15) to be connected to the center shaft (M2) of the secondary propeller (18), and thus, enables to rotate the secondary propeller (18) depending on the amount of water rotating the primary propeller (15) upon hitting the primary propeller (15); and which regulates flow of antifreeze from the antifreeze tank (5) into the washer fluid tank (2).

2. A windshield washer fluid supply system (1) according to Claim 1, **characterized by** the washer fluid tank (2) comprising a manual washer fluid inlet (21), which makes it possible for the user to fill washer fluid independent of rain water, and on the entrance of which, a filter (12) is positioned that enables to remove the impurities within the fluid.

3. A windshield washer fluid supply system (1) according to Claim 1 or 2, **characterized by** the washer fluid tank (2) which has a volume of 2 - 4 liters since it can be continuously filled with rain water independent from fluid addition of the user.

4. A windshield washer fluid supply system (1) according to any one of the preceding claims, **characterized by** the washer fluid tank (2) which has a spring mechanism which pushes the cover (4) away from the water inlet (3) to ensure that the cover (4) provided on the water inlet (3) does not close the water inlet (3) unless a force is applied thereon.

5. A windshield washer fluid supply system (1) according to Claim 4, **characterized by** the antifreeze tank (5) having at least one float (22), which is positioned to be floating on the surface of the antifreeze within the tank, and is tied to the cover (4) located on the water inlet (3) via a rope (23), and which, when the antifreeze is finished, descends and pulls the rope (23) connected thereto and thus the cover (4), and thereby closes the water inlet (3), and which, this way, prevents entrance of rain water into the washer fluid tank (2) when there is no antifreeze left.

6. A windshield washer fluid supply system (1) according to Claim 5, **characterized by** a warning unit which is used, when the cover (4) contacts the water inlet (3), in other words, when it closes the water inlet (3), in order to warn the user visually via the instrument panel about the fact that fluid entrance is blocked.

7. A windshield washer fluid supply system (1) according to any one of the preceding claims, **characterized by** the transmission element (20) which is a shaft that is fastened by being welded to the center shafts (M1, M2) of the primary propeller (15) and the secondary propeller (18).

8. A windshield washer fluid supply system (1) according to any one of the preceding claims, **characterized by** the transmission element (20) which is a chain that connects the center shaft (M1) of the primary propeller and the center shaft (M2) of the secondary propeller to each other and makes a rotational movement at the rotation direction of the propellers (15, 18).

## Patentansprüche

1. Ein Scheibenspülerversorgungssystem (1), das ermöglicht, daß das Regenwasser, das über die Fahrzeugscheiben (O) in regnerischen Wetterumständen fließt und sich bewegt zum Motorhauben (K), eingesammelt wird für Anwendung als ein Fahrzeugscheibenfluid (O), bestehend aus:
- mindestens einem Flüssigkeitstank (2), der in der Form einer Box ist, wo die Flüssigkeit, die für Scheibenwischer verwendet ist, eingesammelt wird, und der beinhaltet einen Wassereintritt (3), der ermöglicht, daß das Wasser hierhin einfließt und mindestens aus einem Deckel (4), der die richtigen Größen besitzt, um den Wassereintritt (3) zu bedecken und angeordnet ist auf dem Wassereintritt (3),
- einem Frostschutztank (5), der befindlich ist im Flüssigkeitstank (2), und so positioniert ist, daß er zum Flüssigkeitstank (2) verbunden ist durch mindestens eine Oberfläche, und einen Frostschutzeintritt (6) besitzt, der sich von besagter Oberfläche nach außen ausstreckt,
- mindestens einer Pumpe (8), die ermöglicht, daß die Mischung von Wasser und Frostschutz im Flüssigkeitstank (2) zum Fahrzeugscheiben (O) eingeliefert wird,
- mindestens einem Regenwassereintritt (11); der befindlich ist im Gebiet, wo das Fahrzeugscheiben (O) und Motorhauben (K) verbunden sind; und der mindestens ein Gitter (9) hat, das sich auf dem Motorhauben (K) befindet und ermöglicht, daß das Wasser am Eingang versammelt wird, und einer Pumpe (10), die ermöglicht, daß das versammelte Regenwasser zum Flüssigkeitstank (2) gerichtet wird,
- mindestens einem Filter (12), der befindlich ist im Innern der Pumpe (10) und der ermöglicht, daß mögliche Fremdstoffe im Regenwasser geräumt werden,
- mindestens einer Verbindung (13), die sich ausstreckt vom Wassereintritt (3) in den Flüssigkeitstank (2),
**dadurch gekennzeichnet, daß**:
- mindestens einer Wasserkammer (14) mit einem primären Propeller (15), der befindlich ist am Ende der Verbindung (13) und eine Drehbewegung durchführt um die Welle (MI) unter der Influenz von fließendem Wasser, und einem Wasserausgang (16), der befindlich ist unter dem primären Propeller (15) und ermöglicht, daß das Wasser in den Flüssigkeitstank (2) einfließt,
- mindestens einer Frostschutzkammer (17) mit einem sekundären Propeller (18), die verbunden ist zur Frostschutzentladungsöffnung (7), die befindlich ist auf der Unterlage des Frostschutz-tanks (5) und die eine Drehbewegung durchführt um die Welle (M2), und einem Frostschutz-ausgang (19), der befindlich ist unter dem sekundären Propeller (18) und der ermöglicht, daß der Frostschutz in den Flüssigkeitstank (2) einfließt,
- mindestens einem Transmissionselement (20), das ermöglicht, daß die Welle (M1) des primären Propellers (15) verbunden wird zur Welle (M2) des sekundären Propellers (18), und so, ermöglicht, daß sich der sekundäre Propeller (18) rotiert, in Abhängigkeit von Wasser-menge, die den primären Propeller (15) rotiert, nach dem Anstoßen zum primären Propeller (15); und das den Fluß von Frostschutz reguliert vom Frostschutztank (5) in den Flüssigkeitstank (2).

2. Ein Scheibenspülerversorgungssystem (1) nach Anspruch 1, **dadurch gekennzeichnet, daß** der Flüssigkeitstank (2) besteht aus einem manuellen Flüssigkeitseingang (21), der für den Verwender möglich macht, Flüssigkeit unabhängig von Regenwasser einzufüllen, und an dessen Eingang ein Filter (12) positioniert ist, der ermöglicht, daß die Fremdstoffe im Fluid gereinigt werden.

3. Ein Scheibenspülerversorgungssystem (1) nach Ansprüche 1 oder 2, **dadurch gekennzeichnet, daß** der Flüssigkeitstank (2) ein Volumen von 2 - 4 Liter besitzt, da er kontinuierlich mit Regenwasser gefüllt werden kann, unabhängig von Fluidhinzufügung des Verwenders.

4. Ein Scheibenspülerversorgungssystem (1) nach den vorhergehenden Ansprüche, **dadurch ge-kennzeichnet, daß** der Flüssigkeitstank (2), der einen Federmechanismus hat, das den Deckel (4) wegschiebt vom Wassereingang (3), um sicherzustellen, daß der Deckel (4), der auf dem Wassereingang (3) versorgt ist, den Wassereingang (3) nicht schließt, sofern keine Kraft darauf ausgeübt ist.

5. Ein Scheibenspülerversorgungssystem (1) nach Anspruch 4, **dadurch gekennzeichnet, daß** der Frostschutztank (5) mindestens einen Schwimmer (22) hat, der positioniert ist als schwimmend auf der Oberfläche des Frostschutzes im Tank, und ist dem Deckel (4) verbunden, der auf dem Wassereingang (3) befindlich ist, durch ein Seil (23), und der, wenn der Frostschutz beendet ist, herunter kommt und das Seil (23) herzieht, das darauf verbunden ist und so den Deckel (4), und aus diesem Grund den Wassereingang (3) verschließt, und der in dieser Weise verhindert den Eingang vom Regenwasser in den Flüssigkeitstank (2), wenn es kein Frostschutz mehr übrig geblieben ist.

6. Ein Scheibenspülerversorgungssystem (1) nach Anspruch 5, **dadurch gekennzeichnet, daß** eine Ermahnungseinheit verwendet wird, wenn der Deckel (4) den Wassereingang (3) kontaktiert, in anderen Worten, wenn er den Wassereingang (3) verschließt, um den Verwender visuell zu warnen durch das Instrumentenpanel über die Tatsache, daß der Fluideingang blockiert ist.

7. Ein Scheibenspülerversorgungssystem (1) nach den vorhergehenden Ansprüche, **dadurch gekennzeichnet, daß** das Transmissionselement (20), das eine Schaft ist, die durch Schweißung befestigt ist zur Wellen (M1, M2) des primären Propellers (15) und sekundären Propellers (18).

8. Ein Scheibenspülerversorgungssystem (1) nach den vorhergehenden Ansprüche, **dadurch gekennzeichnet, daß** das Transmissionselement (20), das eine Kette ist, die die Welle (M1) des primären Propellers und die Welle (M2) des sekundären Propellers miteinander verbindet und eine Drehbewegung durchführt in der Drehrichtung der Propellern (15, 18).

## Revendications

1. Système d'alimentation en liquide de lave-glace (1); qui permet à l'eau de pluie, qui s'écoule sur les pare-brise de véhicule (O) par temps pluvieux et se déplace vers le capot moteur (K), d'être collectée pour servir de lave-glace (O) comprenant:
- au moins un réservoir de liquide lave-glace (2), qui se présente sous la forme d'une boîte dans laquelle le liquide lave-glace utilisé pour les essuie-glaces est collecté, et qui comprend une entrée d'eau (3) permettant à l'eau d'y pénétrer et au moins un couvercle (4) qui a la bonne dimension pour recouvrir l'entrée d'eau (3) et est disposé sur l'entrée d'eau (3),
- un réservoir antigel (5), qui est situé dans le réservoir de liquide de lave-glace (2) et qui est relié au réservoir de liquide de lave-glace (2) par au moins une de ses surfaces et qui comporte une entrée antigel (6) vers l'extérieur de ladite surface,
- au moins une pompe (8) qui permet de délivrer le mélange d'eau et d'antigel dans le réservoir de liquide lave-glace (2) au pare-brise (O),
- au moins une entrée d'eau de pluie (11); qui est situé à l'endroit où le pare-brise (O) et le capot du moteur (K) sont connectés; et qui comporte au moins une grille (9) qui est située sur le capot moteur (K) et permet la collecte d'eau à l'entrée de celle-ci et une conduite (10) permettant de diriger l'eau de pluie vers le réservoir de liquide lave-glace (2),
- au moins un filtre (12) qui est situé à l'intérieur de la conduite (10) et qui permet d'éliminer d'éventuelles impuretés de l'eau de pluie,
- au moins un tuyau (13) qui s'étend de l'entrée d'eau (3) dans le réservoir de liquide de lave-glace (2),
**caractérisé en ce que:**
- au moins une chambre d'eau (14) ayant une hélice primaire (15), qui est située à l'extrémité du tuyau (13) et qui effectue un mouvement de rotation autour de l'arbre central (M1) sous l'influence de l'eau qui s'écoule, et une sortie d'eau (16) située en dessous de l'hélice primaire (15) et permettant à l'eau de s'écouler dans le réservoir de liquide de lave-glace (2),
- au moins une chambre antigel (17) ayant une hélice secondaire (18) qui est reliée à l'ouverture d'évacuation d'antigel (7) située sur la base du réservoir antigel (5) et qui effectue un mouvement de rotation autour de l'arbre central (M2) et une sortie d'antigel (19) située sous l'hélice secondaire (18) et permettant à l'antigel de s'écouler dans le réservoir de liquide lave-glace (2),
- au moins un élément de transmission (20); ce qui permet de relier l'arbre central (M1) de l'hélice primaire (15) à l'arbre central (M2) de l'hélice secondaire (18), et donc de faire tourner l'hélice secondaire (18) en fonction de la quantité de l'eau faisant tourner l'hélice principale (15) en frappant l'hélice principale (15); et qui régule l'écoulement de l'antigel du réservoir d'antigel (5) dans le réservoir de liquide de lave-glace (2).

2. Système d'alimentation en liquide de lave-glace (1) selon la revendication 1, **caractérisé en ce que** le réservoir de liquide lave-glace (2) comprend une entrée manuelle de liquide de lave-glace (21) qui permet à l'utilisateur de à l'entrée duquel est disposé un filtre (12) permettant d'éliminer les impuretés dans le fluide.

3. Système d'alimentation en liquide de lave-glace (1) selon la revendication 1 ou 2, **caractérisé en ce que** le réservoir de liquide de lave-glace (2) a un volume de 2 à 4 litres car il peut être rempli en continu d'eau de pluie.

4. Système d'alimentation en liquide lave-glace (1) selon l'une quelconque des revendications précédentes, **caractérisé par** le réservoir de liquide lave-glace (2) qui comporte un mécanisme de ressort qui repousse le couvercle (4) de l'entrée d'eau (3) que le couvercle (4) prévu sur l'entrée d'eau (3) ne ferme pas l'entrée d'eau (3) à moins qu'une force ne soit appliquée sur celle-ci.

5. Système d'alimentation en liquide lave-glace (1) selon la revendication 4, **caractérisé en ce que** le réservoir antigel (5) comporte au moins un flotteur (22) qui est positionné pour flotter sur la surface de l'antigel à l'intérieur du réservoir et est au couvercle (4) situé sur l'entrée d'eau (3) par l'intermédiaire d'une corde (23), et qui, lorsque l'antigel est terminé, descend et tire la corde (23) reliée à celle-ci et ainsi le couvercle (4), ferme l'entrée d'eau (3) et empêche ainsi l'entrée d'eau de pluie dans le réservoir de liquide lave-glace (2) lorsqu'il ne reste plus d'antigel.

6. Système d'alimentation en liquide de lave-glace (1) selon la revendication 5, **caractérisé par** une unité d'avertissement qui est utilisée, lorsque le couvercle (4) entre en contact avec l'entrée d'eau (3), en d'autres termes, lorsqu'il ferme l'entre d'eau (3), afin d'avertir visuellement l'utilisateur via le tableau de bord du fait que l'entrée de fluide est bloquée.

7. Système d'alimentation en liquide lave-glace (1) selon l'une quelconque des revendications précédentes, **caractérisé par** l'élément de transmission (20) qui est un arbre qui est fixé par soudage aux arbres centraux (M1, M2) de l'hélice primaire (15) et l'hélice secondaire (18).

8. Système d'alimentation en liquide lave-glace (1) selon l'une quelconque des revendications précédentes, **caractérisé par** l'élément de transmission (20) qui est une chaîne qui relie l'arbre central (M1) de l'hélice primaire et l'arbre central (M2) l'hélice secondaire l'un à l'autre et effectue un mouvement de rotation dans le sens de rotation des hélices (15, 18).
